(19) Europäisches Patentamt
European Patent Office
Office européen des brevets

(11) **EP 4 586 701 A1**

(12) **EUROPEAN PATENT APPLICATION**

(43) Date of publication:
**16.07.2025 Bulletin 2025/29**

(21) Application number: **25151218.2**

(22) Date of filing: **10.01.2025**

(51) International Patent Classification (IPC):
**H04W 52/14** (2009.01)    **H04B 7/0413** (2017.01)
**H04W 52/36** (2009.01)    **H04W 52/42** (2009.01)

(52) Cooperative Patent Classification (CPC):
**H04W 52/146; H04B 7/0413; H04W 52/367; H04W 52/42**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.01.2024 KR 20240005573**
**05.06.2024 KR 20240073929**

(71) Applicant: **Samsung Electronics Co., Ltd.**
**Suwon-si, Gyeonggi-do 16677 (KR)**

(72) Inventors:
• **LEE, Gangminh**
16677 Suwon-si (KR)
• **YU, Hyunseok**
16677 Suwon-si (KR)
• **LEE, Dongwook**
16677 Suwon-si (KR)
• **LEE, Jeongtaek**
16677 Suwon-si (KR)

(74) Representative: **Marks & Clerk LLP**
**15 Fetter Lane**
**London EC4A 1BW (GB)**

(54) **ELECTRONIC DEVICE AND OPERATING METHOD OF ELECTRONIC DEVICE**

(57)     An electronic device includes a plurality of antennas, an antenna index buffer configured to store a used antenna index indicating at least one antenna among the plurality of antennas used in each of a plurality of windows, a used power buffer configured to store power consumption of an antenna corresponding to the used antenna index, and processing circuitry configured to calculate a residual specific absorption ratio (SAR) value of each of the plurality of antennas based on the used antenna index, the power consumption and a correlation matrix, and assign transmission power to each of transmitting antennas based on the residual SAR and an operation mode, the transmitting antennas being among the plurality of antennas.

FIG. 2B

EP 4 586 701 A1

## Description

BACKGROUND

The inventive concepts relate to an electronic device configured to set transmission power based on power consumption, and an operating method of the electronic device.

An electronic device may transmit a radio-frequency (RF) signal through an antenna to communicate with another device. Electromagnetic waves from the RF signal transmitted through the antenna may have harmful effects on the human body. In order to reduce the harmful effects of the electromagnetic waves, authorized agencies regulate a total exposure ratio (TER) value measured when an electronic device transmits an RF signal. Accordingly, the electronic device should satisfy a TER value regulatory condition when the RF signal is transmitted.

In this case, the transmission power of the RF signal transmitted by the electronic device should be reduced in order for the electronic device to meet the TER value regulatory condition. The reduction in the transmission power may cause a reduction in communication performance of the electronic device.

SUMMARY

The inventive concepts provide an electronic device that may provide optimal (or improved) communication performance while meeting a total exposure ratio (TER) value regulatory condition. Embodiments provide a method of meeting the TER value regulatory condition while minimizing (or decreasing) the reduction in communication performance of the electronic device.

According to an aspect of the inventive concepts, there is provided an electronic device including a plurality of antennas, an antenna index buffer configured to store a used antenna index indicating at least one antenna among the plurality of antennas used in each of a plurality of windows, a used power buffer configured to store power consumption of an antenna corresponding to the used antenna index, and processing circuitry configured to calculate a residual specific absorption ratio (SAR) value of each of the plurality of antennas based on the used antenna index, the power consumption and a correlation matrix, and assign transmission power to each of transmitting antennas based on the residual SAR and an operation mode, the transmitting antennas being among the plurality of antennas.

According to an aspect of the inventive concepts, there is provided an operating method of an electronic device including a plurality of antennas. The method includes calculating a residual SAR value of each of the plurality of antennas based on a used antenna index, power consumption and a correlation matrix, the used antenna index indicating at least one antenna among the plurality of antennas used in each of a plurality of windows, and the power consumption indicating a power consumption of an antenna corresponding to the used antenna index, and assigning transmission power to each of transmitting antennas based on the residual SAR value and an operation mode.

According to an aspect of the inventive concepts, there is provided an electronic device including a plurality of antennas comprising a first transmitting antenna and a second transmitting antenna, and an antenna index buffer configured to store a used antenna index indicating at least one among the plurality of antennas used in each of a plurality of windows, a used power buffer configured to store power consumption of an antenna corresponding to the used antenna index, and processing circuitry configured to calculate a residual SAR value of each of the first transmitting antenna and the second transmitting antenna based on the used antenna index, the power consumption and a correlation matrix, and assign transmission to each of the first transmitting antenna and the second transmitting antenna based on the residual SAR value and an operation mode.

The plurality of windows comprise a plurality of time windows.

The used power buffer may store power consumption for the at least one antenna corresponding to the used antenna index.

The correlation matrix defines the relationship (i.e. dependencies) between the SAR values for different ones of the antennas. In other words, the correlation matrix defines the extent to which different ones of the antennas are associated with the same power absorption.

At least some of the above and other features of the invention are set out in the claims.

BRIEF DESCRIPTION OF THE DRAWINGS

Embodiments will be more clearly understood from the following detailed description taken in conjunction with the accompanying drawings in which:

FIG. 1 is a diagram of a wireless communication system including an electronic device, according to embodiments;
FIG. 2A is a block diagram of an electronic device according to embodiments;
FIG. 2B is a block diagram of an electronic device according to embodiments;

FIG. 3A is a block diagram showing an arrangement of a plurality of antennas according to embodiments;

FIG. 3B is a block diagram showing an arrangement of a plurality of antennas according to embodiments;

FIG. 3C illustrates an example of a correlation matrix according to embodiments;

FIG. 4 is a flowchart of an operating method of an electronic device according to embodiments;

FIG. 5A is a flowchart of a specific operating method of an operation of setting a parameter, according to embodiments;

FIG. 5B illustrates examples of a window and a slot, included in a total exposure ratio (TER) measurement interval, according to embodiments;

FIG. 6 is a flowchart of a specific operating method of an operation of determining a specific absorption rate (SAR) value of each of a plurality of antennas, according to embodiments;

FIG. 7 illustrates a TER measurement interval of an electronic device according to embodiments;

FIG 8A illustrates an antenna index buffer and a used power buffer of an electronic device according to embodiments;

FIG. 8B illustrates an example of a convolution for calculating an SAR value, according to embodiments;

FIG. 9 is a flowchart of a specific operating method of an operation of determining transmission power of each of a plurality of antennas, according to embodiments;

FIG. 10 is a flowchart of an operating method of a scenario of a 1-RAT and 2-Tx antenna with a priority, according to embodiments;

FIG. 11 is a flowchart of an operating method of a scenario of a 1-RAT and 2-Tx antenna without a priority, according to embodiments;

FIG. 12 is a flowchart of an operating method of a scenario of a 2-RAT and 2-Tx antenna with a priority, according to embodiments; and

FIG. 13 is a block diagram of user equipment according to embodiments.

DETAILED DESCRIPTION

Hereinafter, embodiments will be described in detail with reference to the accompanying drawings.

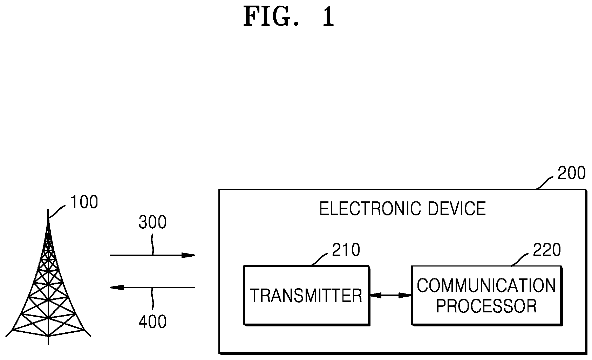

FIG. 1 is a diagram of a wireless communication system including an electronic device, according to embodiments.

Referring to FIG. 1, the wireless communication system may include a base station 100 and/or an electronic device 200. The base station 100 may communicate with the electronic device 200 through a downlink channel 300 and/or an uplink channel 400.

The base station 100 may generally refer to a fixed station, which communicates with the electronic device 200 and other base stations, and exchanges data and control information by communicating with the electronic device 200 and the other base stations. The base station 100 may also be referred to as a Node B, an evolved-Node B (eNB), a base transceiver system (BTS), an access point (AP), etc.

The electronic device 200 may be a fixed device or mobile device capable of wireless communication and may be any one of various devices capable of transmitting and receiving data and control information by communicating with the base station 100. The electronic device 200 may also be referred to as UE (user equipment (UE), terminal equipment, a mobile station (MS), a mobile terminal (MT), a user terminal (UT), a subscribe station (SS), a wireless device, a handheld device, etc.

A wireless communication network between the base station 100 and the electronic device 200 may support communication between a plurality of users by sharing available network resources. For example, in the wireless communication network, information may be transmitted in various manners, such as code division multiple access (CDMA), frequency division multiple access (FDMA), time division multiple access (TDMA), orthogonal frequency division multiple access (OFDMA), single carrier frequency division multiple access (SC-FDMA), etc.

In embodiments, the electronic device 200 may include a transmitter 210 and/or a communication processor 220.

In embodiments, the transmitter 210 may transmit a radio-frequency (RF) signal through the uplink channel 400 to the base station 100. The transmitter 210 may receive an RF signal through the downlink channel 300 from the base station 100.

In embodiments, the transmitter 210 may include a plurality of antennas. The transmitter 210 may transmit and receive RF signals to and from the base station 100 by using at least one of the plurality of antennas. The transmitter 210 may output transmission power to at least one antenna and transmit the RF signal through the at least one antenna to the base station 100.

In embodiments, the communication processor 220 may adjust the transmission power of the transmitter 210. That is, the communication processor 220 may adjust the transmission power of the transmitter 210 so that a desired RF signal may be finally output through at least one antenna. In embodiments, the communication processor 220 may directly adjust the transmission power of the transmitter 210. In embodiments, the communication processor 220 may adjust the transmission power of the transmitter 210 through an additional power management integrated circuit (PMIC).

In embodiments, the communication processor 220 may be implemented as a processor, a numeric processing unit (NPU), a graphic processing unit (GPU), etc. The communication processor 220 may be referred to as a modem.

In embodiments, the communication processor 220 may set a transmission power limit of the transmitter 210. The communication processor 220 may control the transmitter 210 to transmit an RF signal with a transmission power less than the transmission power limit.

In embodiments, the transmission power of the transmitter 210 may be adjusted in response to an uplink transmit power control (TPC) command that is transmitted through the downlink channel 300 from the base station 100 to the electronic device 200. For example, the base station 100 transmit a TPC command to the electronic device 200, based on an estimated signal-to-interference ratio (SIR), to maintain a signal-to-interference ratio (SIR) of the RF signal received from the electronic device 200 at a target level. The electronic device 200 may adjust transmission powers of the RF signals, which are transmitted through the uplink channel 400 to the base station 100, based on the TPC command received through the communication processor 220.

In embodiments, the transmission power of the transmitter 210 may be related to energy radiated by the electronic device 200. That is, the electronic device 200 may generate stronger electromagnetic waves due to RF signals generated with higher transmission power, and electromagnetic waves may have harmful effects on users' health. The harmful effects of the electromagnetic waves on the users may be measured by using a specific absorption rate (SAR) value and/or a power density (PD) value. The SAR value and the PD value, which are measured when the electronic device 200 transmits the RF signal, may be limited under a regulatory condition on a total exposure ratio (TER) value, and a TER value regulatory condition may be as shown in Equation 1:

[Equation 1]

$$TER = \sum_{n=0}^{N-1} \frac{SAR_{avr,n}}{SAR_{limit}} + \sum_{m=0}^{M-1} \frac{PD_{avr,m}}{PD_{limit}} < 1$$

wherein $SAR_{limit}$ denotes the limit of an SAR value set by an authorized agency, $SAR_{avr,n}$ denotes an average value of SAR values during an n-th measurement interval, $PD_{limit}$ denotes the limit of a PD value set by the authorized agency, and $PD_{avr,m}$ denotes an average value of PD values during an m-th measurement interval. According to embodiments, each of n and m may be integers. According to embodiments, the authorized agency may be a governmental body, but embodiments are not limited thereto.

In embodiments, the SAR value and the PD value may be calculated using commonly known formulas. In this case, the SAR value and the PD value may be proportional to the transmission power of the electronic device 200. Because the TER value is calculated as the sum of the SAR value and the PD value, the TER value may be proportional to the transmission power of the electronic device 200. Thus, by increasing or reducing the transmission power of the electronic device 200, the TER value measured when the electronic device 200 transmits the RF signal may be increased or reduced, respectively.

In order to meet the TER value regulatory condition shown in Equation 1 above, the communication processor 220 of the electronic device 200 according to embodiments may calculate a TER value of each of the plurality of antennas and set the transmission power of at least one used antenna of the plurality of antennas. In further detail, the communication processor 220 may store a used antenna index, which is an index of at least one used antenna of the plurality of antennas used in each window, store the power consumption of the antenna corresponding to the used antenna index, the used antenna index, and calculate the TER value based on the power consumption and an influence matrix. In addition, the communication processor 220 may calculate a transmission power limit of at least one used antenna in a setting target window, based on the TER value, and set the transmission power of the at least one used antenna, based on the transmission power limit of the at least one used antenna.

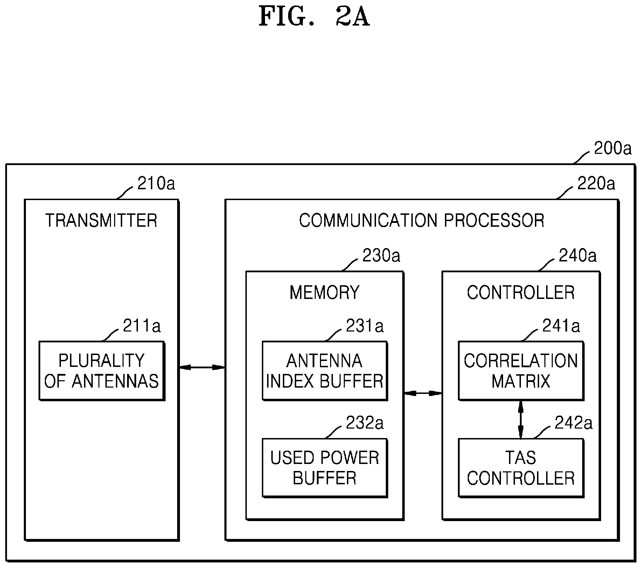

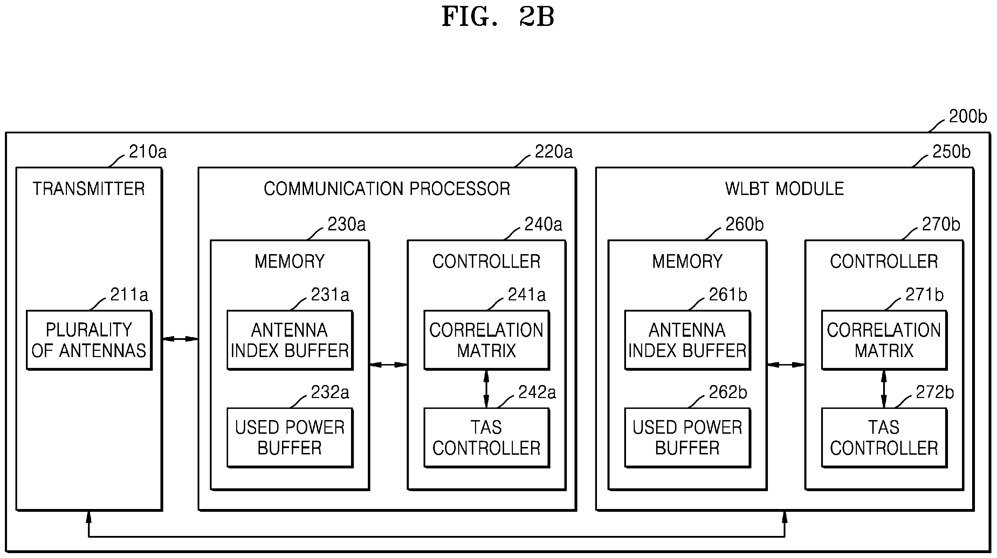

FIGS. 2A and 2B are each a block diagram of an electronic device according to embodiments.

Referring to FIG. 2A, an electronic device 200a according to embodiments may include a transmitter 210a and/or a communication processor 220a.

In embodiments, the transmitter 210a may include a plurality of antennas 211a. The transmitter 210a may transmit and receive RF signals by using at least one of the plurality of antennas 211a.

In embodiments, each of the plurality of antennas 211a may transmit an RF signal to a base station (e.g., 100 in FIG. 1) through an uplink channel (e.g., 400 in FIG. 1). Each of the plurality of antennas 211a may receive an RF signal from the base station 100 through a downlink channel (e.g., 300 in FIG. 1).

In embodiments, at least one of the plurality of antennas 211a may receive transmission power from the transmitter 210a and transmit the RF signal by using the received transmission power.

In embodiments, the communication processor 220a may include a memory 230a and/or a controller 240a. In embodiments, a network supported by the communication processor 220a may include 5th Generation (5G) (or new radio (NR)), long-term evolution (LTE), long-term evolution-advanced (LTE-A), worldwide interoperability for microwave access (WiMAX), code division multiple access (CDMA), global system for mobile communications (GSM), wireless local area network (WLAN), wireless fidelity (Wi-Fi), Bluetooth, and other arbitrary wireless communication techniques.

In embodiments, the memory 230a may include an antenna index buffer 231a and/or a used power buffer 232a.

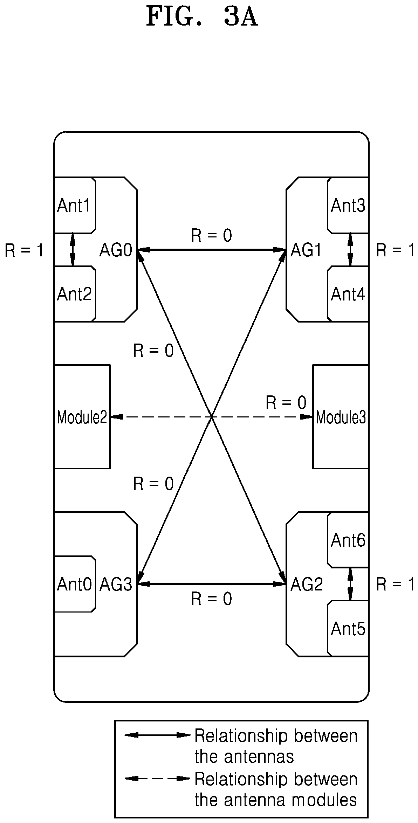

In embodiments, the antenna index buffer 231a may store indices of used antennas during a moving average window. For example, the antenna index buffer 231a may store a used antenna index corresponding to a used antenna in each of a plurality of windows included in the moving average window. The moving average window may correspond to a TER measurement interval and comprise a plurality of windows within the TER measurement interval. The used antenna index may refer to any one of an antenna group (e.g., AG0 to AG4 in FIG. 3A) used to transmit an RF signal, an individual antenna (e.g., Ant0 to Ant6 in FIG. 3A), and/or a module (e.g., Module2 or Module3 in FIG. 3A). The communication processor 220a may store a used antenna index corresponding to each of a plurality of windows (e.g., M windows in FIG. 3A) in the antenna index buffer 231a.

In embodiments, the used power buffer 232a may store power consumption used during the moving average window. For example, the used power buffer 232a may store power consumed by an antenna corresponding to each of the plurality of windows included in the moving average window. The power consumption may indicate a power value used by an antenna indicated by a used antenna index corresponding to each window. The communication processor 220a may store power consumption corresponding to each of the plurality of windows (e.g., M windows in FIG. 3A) in the used power buffer 232a.

In embodiments, the controller 240a may control all operations of the communication processor 220a. The controller 240a may include a correlation matrix 241a and/or a TAS controller 242a. The correlation matrix 241a may be stored in a storage, e.g. a memory within the controller 240a.

In embodiments, the controller 240a may calculate a TER value, based on the used antenna index, power consumption, and the correlation matrix 241a. In this case, the controller 240a may read the used antenna index stored in the antenna index buffer 231a, read power consumption stored in the used power buffer 232a, and use the used antenna index and the power consumption to calculate the TER value.

In embodiments, the correlation matrix 241a may be a matrix that stores correlation coefficients between antenna groups. In this case, a degree of influence of exposure caused by RF signal transmission of an i-th antenna $Ant_i$ on a j-th antenna $Ant_j$ may be the same as (or similar to) a degree of influence of exposure caused by RF signal transmission of the j-th antenna $Ant_j$ on the i-th antenna $Ant_i$, and thus, an influence matrix may be a symmetric matrix.

In embodiments, the correlation matrix 241a may be previously calculated (or alternatively, given) based on at least one of correlations between the plurality of antennas 211a, a direction in which the plurality of antennas 211a emit electromagnetic waves (e.g., a respective direction in which each of the plurality of antennas 211a emits electromagnetic waves), the amount of electromagnetic waves emitted (e.g., an amount of electromagnetic energy contained in the waves) by the plurality of antennas 211a, a state of the electronic device 200a, and/or distances between the plurality of antennas 211a.

In this case, the state of the electronic device 200a may refer to the influences of use restriction of the plurality of antennas 211a due to other operations and the power consumption of the electronic device 200a. In this case, the correlations between the plurality of antennas 211a, the direction in which the plurality of antennas 211a emit electromagnetic waves, the amount of electromagnetic waves emitted by the plurality of antennas 211a, a state of the electronic device 200a, and/or the distances between the plurality of antennas 211a may be determined at a point in time of manufacturing the electronic device 200a and may not be changed, but the state of the electronic device 200a may continuously change depending on an operation of the electronic device 200a. For example, the correlation matrix 241a may comprehend characteristics of antennas and then be pre-calculated (or calculated) to represent correlations between the respective antennas, based on the influence of coupling between the antennas on SAR/PD exposure, additional influence of a beam index of each antenna on the SAR/PD exposure, and/or additional influence of a state of the electronic device 200a (e.g., how a user takes a handgrip on the electronic device 200a, whether the electronic device 200a is connected to a universal serial bus (USB) cable, and/or whether a cable is connected to a terminal for voice output) on the SAR/PD exposure. In some embodiments, the correlation matrix 241a may be calculated by the device 200a based on one or more of correlations between the plurality of antennas 211a, the direction in which the plurality of antennas 211a emit electromagnetic waves, the amount of electromagnetic waves emitted by the plurality of antennas 211a, a state of the electronic device 200a, and/or the distances between the plurality of antennas 211a. In some embodiments, the calculation of the correlation matrix 241a may be performed by another device or system and then provided to the electronic device 200a.

In embodiments, the controller 240a may calculate the TER value and an SAR limit. For example, a TAS controller 242a of the controller 240a may calculate a TER value of a window corresponding to a specific point in time. To this end, the controller 240a may read a used antenna index of the window corresponding to the specific point in time from the antenna index buffer 231a, read power consumption of a used antenna of the window corresponding to the specific point in time from the used power buffer 232a), and perform a convolution of the used antenna index and power consumption with a correlation matrix. By performing the convolution of the used antenna index and power consumption with the correlation matrix, not only a TER value caused by power actually used by an antenna corresponding to the used antenna index, but also a TER value caused by another antenna affected by the antenna corresponding to the used antenna index may be considered. That is, the controller 240a may perform the convolution and calculate an effective TER value caused by the antenna corresponding to the used antenna index during the window corresponding to the specific point in time. The TAS controller 242a may calculate how much to limit an SAR value in the next window, based on the calculated effective TER value.

The electronic device 200a of FIG. 2A has been described above based on the fact that 5G (or NR), LTE, Bluetooth, and/or Wi-Fi are performed in a single communication processor (e.g., a single chip), without being limited thereto.

Referring to FIG. 2B an electronic device 200b may further include a wireless LAN Bluetooth (WLBT) module 250b. Redundant descriptions with FIG. 2A are omitted. In embodiments, Wi-Fi or Bluetooth communication may be performed in the WLBT module 250b, which is a separate heterogeneous chip. Similar to the memory 230a, the WLBT module 250b may include a memory 260b having buffers (e.g., 261b and 262b) configured to store how much power was consumed by which antenna. For example, an antenna index buffer 261b may store a used antenna index indicating a used antenna while Wi-Fi communication or Bluetooth communication is performed in the WLBT module 250b. A used power buffer 262b may store power consumption of the used antenna index when Wi-Fi communication or Bluetooth communication is performed in the WLBT module 250b. Accordingly, even the electronic device 200b including at least one heterogeneous chip may calculate a TER value per antenna, based on the antenna index buffer 261b and the used power buffer 262b included in the at least one heterogeneous chip. Accordingly, an SAR limit may be calculated, and thus, calculation complexity may be reduced even when the at least one heterogeneous chip is added. The WLBT module 250b may include a controller 270b having a correlation matrix 271b and/or a TAS controller 272b. Each of the controller 270b, the correlation matrix 271b and/or the TAS controller 272b may be (and/or perform operations) the same as (or similar to) the correlation matric 241a and/or the TAS controller 242a, respectively, in connection with the Wi-Fi and/or Bluetooth communication.

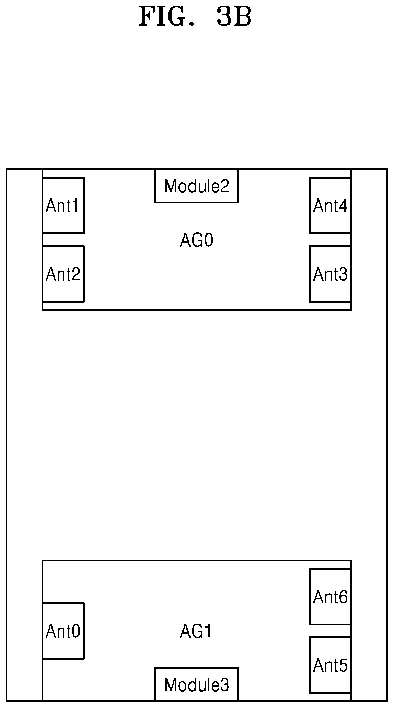

FIGS. 3A and 3B are each a block diagram showing an arrangement of a plurality of antennas according to embodiments.

Referring to FIG. 3A, an example of an arrangement of a plurality of antenna (e.g., 211a of FIG. 2A or FIG. 2B) included in an electronic device (e.g., 200a of FIG. 2A or 200b of FIG. 2B) according to embodiments may be confirmed. Although an electronic device including a total of seven antennas and two modules is illustrated in FIGS. 3A and 3B, the inventive concepts are not limited thereto. In embodiments, the number and positions of antennas (and/or modules, groups, etc.) may be adjusted.

In embodiments, from among a plurality of antennas (e.g., first to seventh antennas Ant0 to Ant6), antennas that are correlated with each other (e.g., in physical proximity to each other) may form one antenna group. For example, the second antenna Ant1 and the third antenna Ant2 may form a first antenna group AG0. In this case, a correlation coefficient between the second antenna Ant1 and the third antenna Ant2 may be 1. The first antenna group AG0 may be at an upper end of an electronic device. The fourth antenna Ant3 and the fifth antenna Ant4 may form a second antenna group AG1. A correlation coefficient between the fourth antenna Ant3 and the fifth antenna Ant4 may be 1. The second antenna group AG1 may be at the upper end of the electronic device. In this case, the first antenna group AG0 may radiate an RF signal at an upper left side of the electronic device, and the second antenna group AG1 may radiate an RF signal at an upper right side of the electronic device. A correlation coefficient between separate antenna groups may be 0. That is, a correlation coefficient between the first antenna group AG0 and the second antenna group AG1 may be 0. For example, even when an RF signal is transmitted from the first antenna group AGO, the transmission of the RF signal may not affect a TER value of the second antenna group AG1.

In embodiments, the sixth antenna Ant5 and the seventh antenna Ant6 may form a third antenna group AG2. A correlation coefficient between the sixth antenna Ant5 and the seventh antenna Ant6 may be 1. The third antenna group AG2 may be at a lower right side of the electronic device. The first antenna Ant0 may form a fourth antenna group AG3. The fourth antenna group AG3 may be at a lower left side of the electronic device. In this case, a correlation coefficient between the third antenna group AG2 and the fourth antenna group AG3 may be 0. For example, even when an RF signal is transmitted from the third antenna group AG2, the transmission of the RF signal may not affect a TER value of the fourth antenna group AG3.

In embodiments, each of a first module Module2 and a second module Module3 may correspond to an antenna module configured to transmit millimeter wave (mmWave). The first module Module2 may be at a middle left side of the electronic device, and the second module Module3 may be at a middle right side of the electronic device. In this case, the first module Module2 and the second module Module3 may be independent of each other. For example, a correlation coefficient between the first module Module2 and the second module Module3 may be 0.

In the above-described example, the description is based on forming an antenna group at each corner of the electronic device, without being limited thereto. According to embodiments, when a transmitted RF signal affects a TER value of another antenna, a variety of shapes in antenna grouping may be possible. For example, referring to FIG. 3B, a plurality of antennas may be grouped into two antenna groups. The first antenna group AG0 and the second antenna group AG1 may be independent of each other. However, antennas included in each of the first antenna group AG0 and the second antenna group AG1 may be dependent on each other. For example, the first antenna group AG0 may include the second to fifth antennas Ant1 to Ant4 and the first module Module2. The second antenna group AG1 may include the first antenna Ant0, the sixth antenna Ant5, the seventh antenna Ant6, and the second module Module3. The first antenna group AG0 may be at the upper end of the electronic device, and the second antenna group AG1 may be at a lower end of the electronic device.

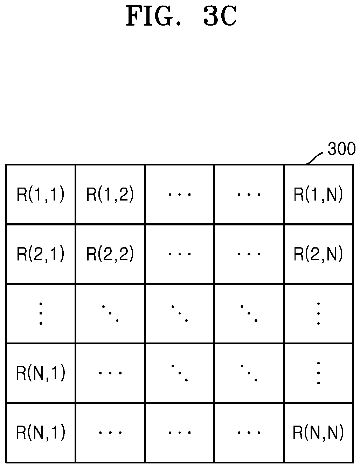

FIG. 3C illustrates an example of a correlation matrix according to embodiments.

Referring to FIG. 3C, a correlation matrix 300 may be composed of N rows and N columns. The correlation matrix 300 of FIG. 3C may correspond to the correlation matrix 241a of FIG. 2A or the correlation matrix 241a or 271b of FIG. 2B. According to embodiments, N may be in integer.

A degree of influence of exposure caused by RF signal transmission of an i-th antenna Anti on a j-th antenna Antj may be expressed as an element value of $R(i,j)$ (i and j are different natural numbers, each of which is N or less). For example, a degree of influence of exposure caused by RF signal transmission of a first antenna Ant1 on a second antenna Ant2 may be expressed as an element value of $R(1,2)$. In this case, the degree of the influence of exposure caused by the RF signal transmission of the first antenna Ant1 on the second antenna Ant2 may be the same as (or similar to) a degree of influence of exposure caused by RF signal transmission of the second antenna Ant2 on the first antenna Ant1. That is, $R(1,2)$ may have the same value as (or a similar value to) $R(2,1)$. Accordingly, the correlation matrix 300 may be a symmetric matrix.

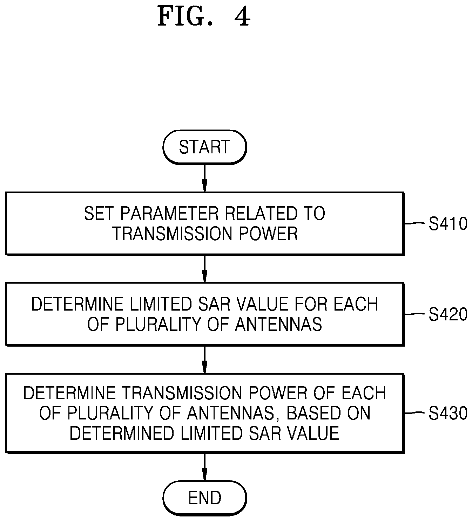

FIG. 4 is a flowchart of an operating method of an electronic device, according to embodiments.

Referring to FIG. 4, in operation S410, an electronic device (e.g., 200 in FIG. 1) may set a parameter related to transmission power. The parameter may be an initially set value and be a value set based on a previous moving average window. The parameter may be a value related to transmission power dB of each of a plurality of antennas (e.g., 211a of FIG. 2A or FIG. 2B).

In operation S420, the electronic device may determine a limited SAR value of each of a plurality of antennas. To this end, the electronic device may store a used antenna index in an antenna index buffer (e.g., 231a of FIG. 2A, or 231a and 271b of FIG. 2B) during a moving average window. The electronic device may store a used antenna index in an antenna index buffer during a plurality of windows included in a TER measurement interval. The electronic device 200 may store power consumption (i.e. an indication of the power consumption) in a used power buffer (e.g., 232a in FIG. 2A, or 232a or 272b in FIG. 2B). The electronic device may store power consumption of the used antenna in the used power buffer during each of the plurality of windows included in the TER measurement interval. In this case, the power consumption stored in the used power buffer may correspond to the used antenna index stored in the antenna index buffer. Thereafter, the electronic device may calculate an SAR value. The electronic device may calculate the SAR value, based on the used antenna index, the power consumption, and a correlation matrix (e.g., 241a of FIG. 2A, and 241a and 271b of FIG. 2B), by using a controller (e.g., 240a of FIG. 2A, and 240a or 270b of FIG.2B). The electronic device may calculate a residual SAR value, based on the calculated SAR value (e.g., the limited SAR value), and calculate an available SAR value, based on the residual SAR value. According to embodiments, the limited SAR value calculated in operation S420 is distinct from the limit of the SAR value set by an authorized agency.

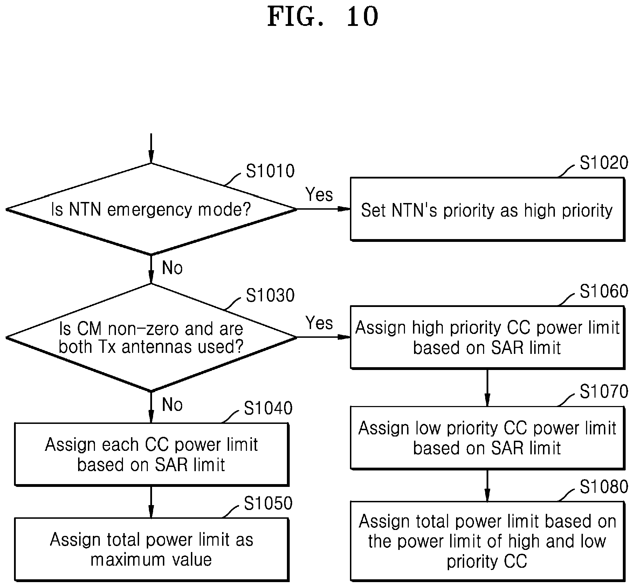

In operation S430, the electronic device may determine the transmission power of each of the plurality of antennas, based on the determined limited SAR value. For example, the electronic device may calculate a transmission power limit. The electronic device may calculate a residual SAR value, based on the SAR value calculated in operation S420, calculate an available SAR value, based on the residual SAR value, and calculate a transmission power limit of the used antenna, based on the available SAR value. Thereafter, the electronic device may calculate transmission power, based on the calculated transmission power limit. According to embodiments, the determination of the transmission power may also be based on an operation mode of the electronic device as discussed further below in connection with FIGS. 10-12. According to embodiments, after completing operation S430, the electronic device may perform network communication with another device (e.g., the base station 100). For example, the electronic device may generate a first signal (e.g., using the communication processor 220a, the WLBT module 250b and/or the transmitter 210a), process the first signal to perform one or more among modulating, upconverting, filtering, amplifying and/or encrypting on the first signal, and transmit the processed first signal to the base station 100 via the plurality of antennas 211a of the electronic device at the determined transmission powers. Additionally or alternatively, the electronic device may receive a second signal (e.g., a response signal with respect to the transmitted first signal) from the base station 100 via the plurality of antennas 211a of the electronic device, process the second signal to perform one or more among demodulating, downconverting, filtering, amplifying and/or decrypting on the second signal, and perform a further operation(s) based on the processed second signal. For example, the further operation(s) may include one or more of providing the processed second signal to a corresponding application executing on the electronic device, storing the processed second signal, sending a response signal to the base station 100 (e.g., based on a processing result of the corresponding application executing on the electronic device), etc.

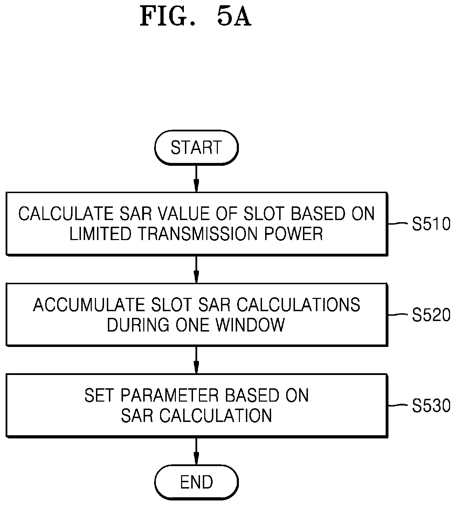

FIG. 5A is a flowchart of a specific operating method of an operation of setting a parameter, according to embodiments. The parameter may be transmission power increased by a first size or a second size as discussed below.

Operations S510 to S530 of FIG. 5A may correspond to detailed operations of operation S410 of setting a parameter related to transmission power in FIG. 4.

Referring to FIG. 5A, in operation S510, an electronic device may calculate an SAR value of a slot, based on a limited transmission power. The limited transmission power may be an initial transmission power value of each of a plurality of antennas. The electronic device may calculate an SAR value by performing a convolution of a used antenna index and power consumption, based on the limited transmission power, per slot.

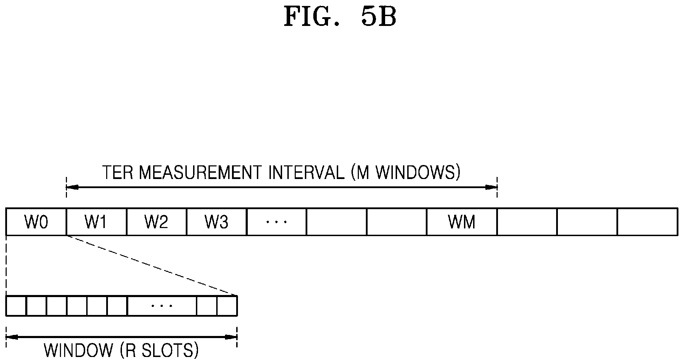

In operation S520, the electronic device may accumulate slot SAR calculations during one window. In embodiments, a window may include a plurality of slots. For example, referring also to FIG. 5B, one window may include R slots. That is, the electronic device may determine an SAR value for one window by calculating SAR values during the R slots. In operation S520, one window may correspond to an initial window W0 of FIG. 5B.

In operation S530, the electronic device may set a parameter, based on SAR calculations. The electronic device may identify a slope of the SAR value (e.g., a slope across the slots of a window), based on the SAR value calculated in operation S520, and set parameter according to the slope of the SAR value. In an example, when a slope size of the SAR value exceeds a threshold value, transmission power increased by a first size more than the limited transmission power may be set as a parameter. In another example, when the slope size of the SAR value is less than the threshold value, transmission power increased by a second size more than the limited transmission power may be set as a parameter. In this case, the second size may be greater than the first size. In embodiments, the electronic device may set a parameter for starting a TER measurement interval including M windows W1 to WM, based on SAR values of R slots of an initial window W0.

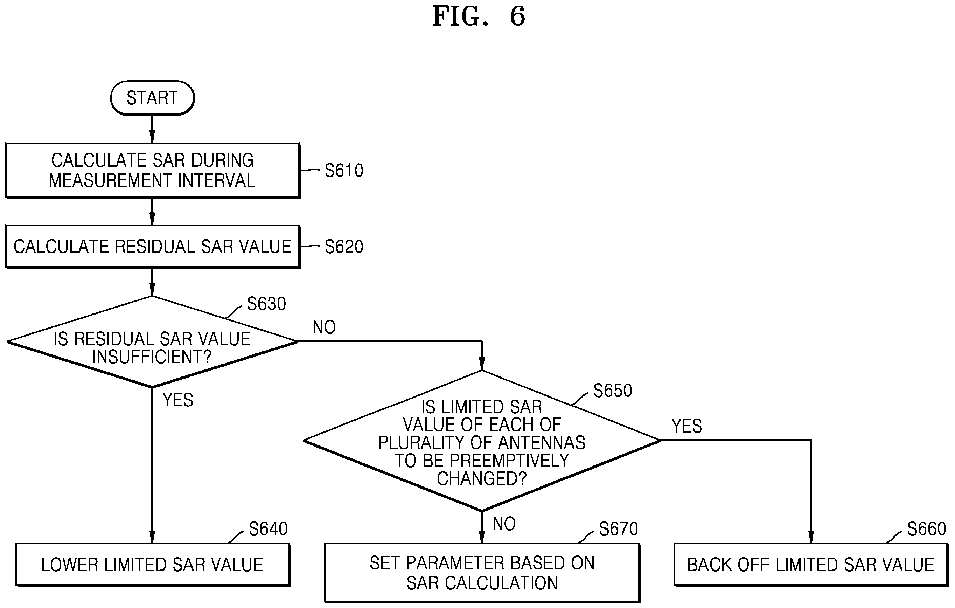

FIG. 6 is a flowchart of a specific operating method of an operation of determining an SAR value of each of a plurality of antennas, according to embodiments.

Operations S610 to S670 of FIG. 6 may correspond to detailed operations of operation S420 of determining an SAR value of each of a plurality of antennas (e.g., 211a of FIG. 2A or FIG. 2B) in FIG. 4.

Referring to FIG. 6, in operation S610, an electronic device (e.g., 200 in FIG. 1) may calculate an SAR value during a measurement interval. The measurement interval may correspond to a TER measurement interval including M windows of FIG. 5B.

In operation S620, an electronic device may calculate a residual SAR value. The electronic device may calculate a residual SAR value indicating how much less the SAR value used was than a regulatory SAR value, based on the SAR value calculated during the TER measurement interval. The regulatory SAR value may refer to an SAR value calculated when a TER value of transmission power satisfies regulatory conditions during the TER measurement intervals including the M windows.

In operation S630, the electronic device may determine whether the residual SAR value is insufficient. The electronic device may determine whether the residual SAR value is less than a predetermined (or alternatively, given) ratio of the regulatory SAR value. For example, the predetermined (or alternatively, given) ratio may be, but is not limited to, 10% and may vary within a wide range of values.

In embodiments, a controller may compare the residual SAR value with 10% of a regulatory SAR value. When the residual SAR exceeds 10% of the regulatory SAR value, it may be determined that the residual SAR value is sufficient, and operation S650 may be performed. When the residual SAR value is less than 10% of the regulatory SAR value, the controller may determine that the residual SAR value is insufficient, and operation S640 may be performed.

In operation S640, the electronic device may lower the limited SAR value. For example, the controller may save an SAR budget during the TER measurement interval by reducing a limited SAR value of the next window by reducing the transmission power.

In operation S650, the electronic device may determine whether to preemptively change the limited SAR value of each of the plurality of antennas. The electronic device may predict an SAR value of the next window, based on changes in SAR values during the TER measurement interval. For example, the controller may determine an SAR slope, based on the changes in the SAR values during the TER measurement interval, and predict the SAR value of the next window, based on the determined SAR slope. The controller may determine whether the predicted SAR value (e.g. given by the sum of predicted SAR values for the slots in that window) in the next window exceeds a predetermined (or alternatively, given) ratio (may also be referred to herein as a first ratio) of the regulatory SAR value. For example, the predetermined (or alternatively, given) ratio may be, but is not limited to, 90% and may vary within a wide range of values. In embodiments, when the sum of predicted SAR values in the next window exceeds 90% of the regulatory SAR value, the controller may perform operation S660 to back off the limited SAR value and set an SAR value in the next window to be less than the predicted SAR value. In embodiments, when the sum of predicted SAR values in the next window is less than 90% of the regulatory SAR value, the controller may perform operation S670 to set the limited SAR value to a maximum (or highest) limited SAR value (e.g. to set the limited SAR value to 90% of the regulatory SAR value). Thus, performance degradation due to unnecessary transmission power may be prevented (or reduced) while complying with the regulatory SAR value in the next window.

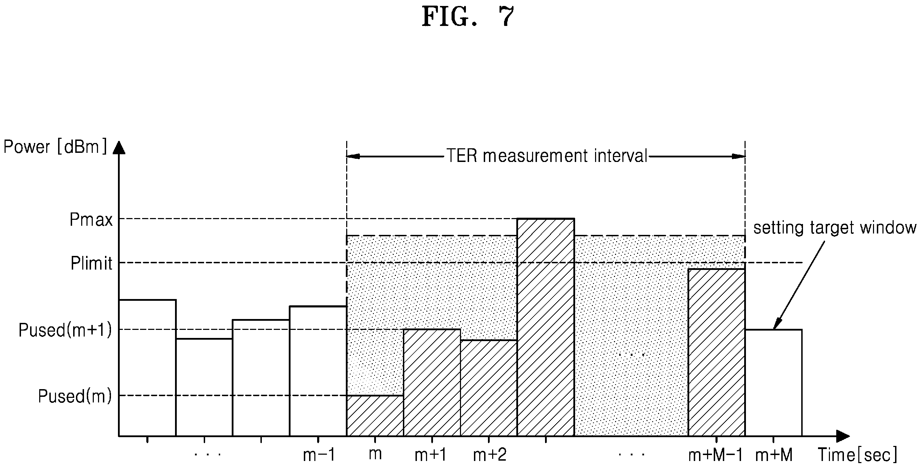

FIG. 7 illustrates a TER measurement interval of an electronic device according to embodiments.

Referring to FIG. 7, a histogram-type graph of measurement results of power consumption over time may be confirmed. In FIG. 7, an abscissa denotes time, an ordinate denotes power consumption, and each interval may correspond to one window.

The window may be a unit having a preset (or alternatively, given) time length. For example, one window may have a time length of 250 ms. As described above with reference to FIG. 5B, the one window may include R slots. A slot may represent a time unit for transmitting a plurality of communication symbols. In embodiments, a communication processor (e.g., 220 in FIG. 1) may measure transmission power of a transmitter (e.g., 210 in FIG. 1) per slot, and obtain transmission power per window by adding up the measured transmission power per slot.

The TER measurement interval may refer to an interval during which a TER value is measured to determine whether a TER value regulatory condition is satisfied. The TER measurement interval may be set based on a communication frequency band of an electronic device (e.g., 200 in FIG. 1). For example, when the communication frequency band of the electronic device is less than 3GHz, the TER measurement interval may be 100s and include 400 windows. When the communication frequency band of the electronic device is 3GHz or more, and less than 6GHz, the TER measurement interval may be 60s and include 240 windows. When the communication frequency band of the electronic device is 6GHz or more, the TER measurement interval may be 4s and include 16 windows.

In embodiments, because the TER value is proportional to transmission power of the electronic device, the electronic device may calculate a TER value during the TER measurement interval, based on power consumption during the TER measurement interval. The electronic device 200 may calculate a limited SAR value and a transmission power limit of a setting target window, based on the calculated TER value, and set transmission power of the setting target window, based on the transmission power limit of the setting target window.

The setting target window may be a window for setting transmission power, based on a TER value of the TER measurement interval. For example, the setting target window may be a window immediately (or sequentially) following windows included in the TER measurement interval. In embodiments, when the TER measurement interval includes a total of M windows from a time point t=m to a time point t=m+M-1, a setting target window may be a window at a time point t=m+M.

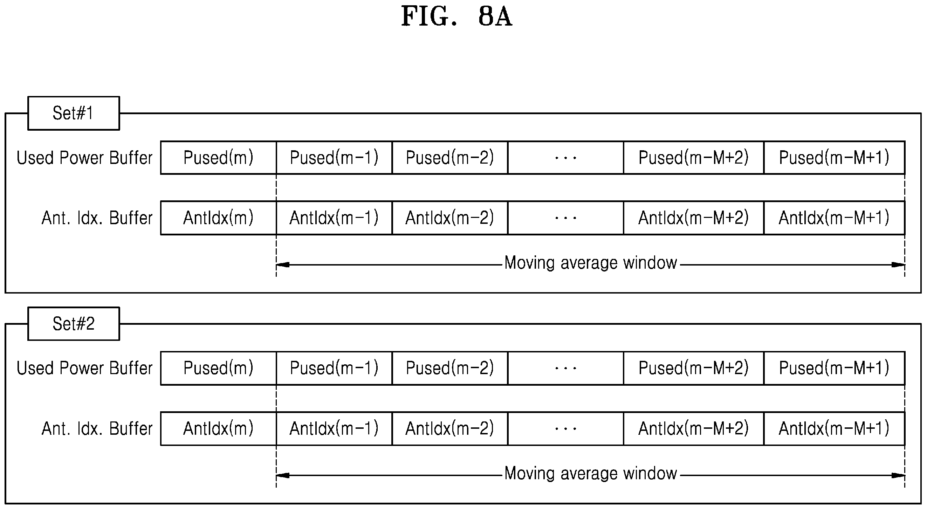

FIG 8A illustrates an antenna index buffer and a used power buffer of an electronic device according to embodiments.

Referring to FIG. 8A, the electronic device (e.g., 200 of FIG. 1) may store each set of buffers (e.g., including an antenna index buffer and a user power buffer) for each transmitting antenna. For example, an electronic device capable of operating two transmitting antennas simultaneously (or contemporaneously) may store two sets of buffers as shown in FIG. 8A, and an electronic device capable of operating three transmitting antennas simultaneously (or contemporaneously) may store three sets of buffers. It may be seen that a used power buffer (e.g., 232a of FIG. 2A, or 232a and 262b of FIG. 2B) and an antenna index buffer (e.g., 231a of FIG. 2A, or 231a and 261b of FIG. 2B) are illustrated for each set.

In each area of the antenna index buffer, a used antenna index of a window corresponding thereto may be stored. For example, a used antenna index of a window including a time point t=m may be stored in an area indicated by AntIdx(m), and a used antenna index of a window including a time point t=m+M-1 may be stored in an area indicated by AntIdx(m+M-1).

When there are a plurality of used antennas in a window including a specific point in time, the plurality of used antenna indices may be respectively stored in a plurality of antenna index buffers (e.g., in correspondence to the window).

In each area of the used power buffer, power consumption of a used antenna in a window corresponding thereto may be stored. For example, power consumption of a used antenna in the window including the time point t=m may be stored in an area indicated by Pused(m), and a power consumption of a used antenna index in the window including the time point t=m+M-1 may be stored in an area indicated by Pused(m+M-1).

In this case, the power consumption stored in each area of the used power buffer may correspond to the used antenna index stored in each area of the antenna index buffer. For example, the power consumption of the used antenna corresponding to the used antenna index stored in the area AntIdx(m) of the antenna index buffer may be stored in the area Pused(m) of the used power buffer. When a plurality of used antennas are used in the window including the specific point in time, power consumptions of the plurality of used antennas may be respectively stored in a plurality of used power buffers (e.g., in correspondence to the window).

In embodiments, it should be noted that the number of sets may be independent of the number of transmitting antennas actually used by the electronic device and may be determined by the number of transmitting antennas that may be simultaneously (or contemporaneously) used by the electronic device.

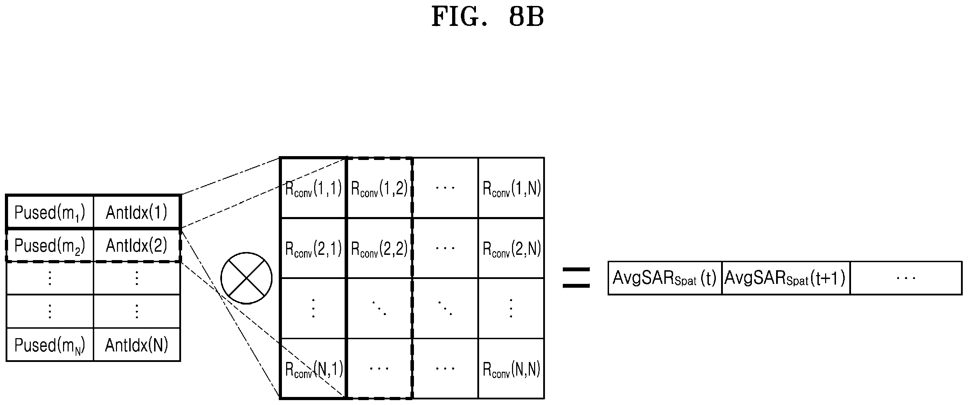

FIG. 8B illustrates an example of a convolution for calculating an SAR value, according to embodiments.

Referring to FIG. 8B, an electronic device may calculate the SAR value for each window according to Equation 2:

[Equation 2]

$$AvgSAR_{Spat}(t, k) = P_{used}(t) \otimes AntIdx(t, k)$$

wherein $R_{coup}$ denotes a correlation matrix (e.g., 241a of FIG. 2A, or 241a or 271b of FIG. 2B), $P_{used}(t)$ denotes a power consumption value corresponding to a $t$ window in a used power buffer (e.g., 232a of FIG. 2A, or 232a or 262b of FIG. 2B, and $AntIdx(t, k)$ denotes an antenna index value corresponding to the $t$ window in an antenna index buffer (e.g., 231a of FIG. 2A, or 231a or 261b of FIG. 2B). $A \otimes B(k)$ may represent a convolution formula by which a value of an antenna index of A and B over time is multiplied by a relationship with k over time.

In embodiments, the electronic device may determine a time-averaged SAR by considering a power value of an antenna used in each window and a correlation between the used antenna and a k antenna through Equation 2. However, Equation 2 may be modified as follows to exclude antennas that are not actually used.

[Equation 3]

$$AvgSAR_{Spat}(t, k) = \begin{cases} P_{used}(t) \otimes AntIdx(k), & \text{if } k \text{ } is \text{ in } AntIdx(s) \text{ for all } s = [t - m, t] \\ 0, & \text{if } k \text{ } isn't \text{ in } AntIdx(s) \text{ for all } s = [t - m, t] \end{cases}$$

An average SAR value AvgSAR of unused antennas may be assumed to be 0 because it may be understood that the average SAR value AvgSAR is not a value having a great influence through a converged matrix and because it may be understood that there is no violation of a time-averaged SAR in the unused antennas.

Based on Equation 3, embodiments may express a formula that always considers a two-transmitting antenna structure as follows:

[Equation 4]

$$AvgSAR_{Spat,total}(t, k) = AvgSAR_{Spat,Tx0}(t, k) + AvgSAR_{Spat,Tx1}(t, k)$$

wherein $AvgSAR_{Spat,Tx0}(t, k)$ denotes an SAR value that is based on a first transmitting antenna (e.g., Tx0), and $AvgSAR_{Spat,Tx1}(t, k)$ denotes an SAR value that is based on a second transmitting antenna (e.g., Tx1).

In embodiments, when only the first transmitting antenna is used, an actual value of $AvgSAR_{Spat,Tx1}$ may be 0. Also, when both antennas (e.g., the first and second transmitting antennas) are used, the average SAR at a k index (e.g., $AvgSAR_{Spat,total}(t, k)$ may increase depending on whether or not an antenna index is correlated. That is, rather than applying a TAS algorithm after an SAR value is assigned for each conventional wireless access technology (e.g., radio access technology (RAT)), the TAS algorithm may be preemptively applied by always considering the two antennas to determine a limited SAR value for each antenna. In this case, a transmission power limit for each antenna may be determined, based on the determined limit SAR value for each antenna.

In addition, when it is necessary (or otherwise desirable) to consider an SAR value obtained from a heterogeneous chip, $AvgSAR_{Spat,total}(t, k)$ may be considered and simply extended based on an SAR of the heterogeneous chip for each antenna. The SAR value of the heterogeneous chip may be expressed as in Equation 5 below.

[Equation 5]

$$AvgSAR_{Spat,total,Coex}(t, k) = AvgSAR_{Spat,total}(t, k) + AvgSAR_{WLBT}(t, k)$$

wherein $AvgSAR_{Spat,total,Coex}(t, k)$ denotes an overall SAR value of an electronic device including both a communication processor (e.g., 220a in FIG. 2B) and the heterogeneous chip (e.g., 250b in FIG. 2B), $AvgSAR_{Spat,total}(t, k)$ denotes an SAR value based on the communication processor, and $AvgSAR_{WLBT}(t,k)$ denotes an SAR value based on the heterogeneous chip. It may be understood that similar to how the calculation of the SAR value may be extended to the heterogeneous chip, the calculation the SAR value may also be extended to three transmitting antennas are operated simultaneously (or contemporaneously).

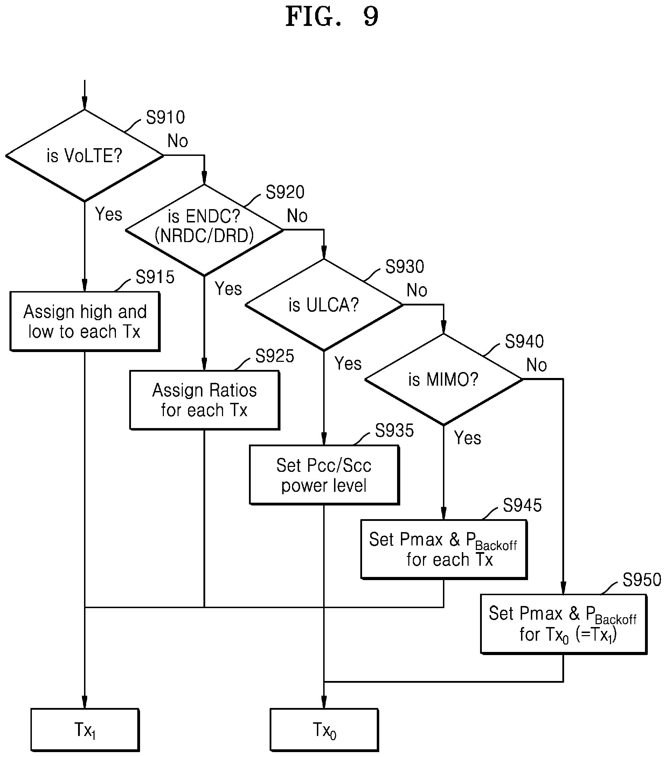

FIG. 9 is a flowchart of a specific operating method of an operation of determining transmission power of each of a plurality of antennas, according to embodiments.

Operations S910 to S950 of FIG. 9 may correspond to detailed operations of operation S430 of determining the transmission power of each of the plurality of antennas, based on a limited SAR value determined in FIG. 4.

Referring to FIG. 9, in operation S910, an electronic device may determine whether a Voice over LTE (VoLTE) event has occurred. When the VoLTE event has occurred, to ensure call quality, one antenna may transmit signals with a maximum (or highest) transmission power (e.g., 23dB), and another antenna may transmit signals with a lower transmission power (e.g., 17dB). Accordingly, in operation S915, the electronic device may respectively assign higher transmission power and lower transmission power to a first transmitting antenna Tx0 and a second transmitting antenna Tx1, respectively. When the VoLTE event is not detected, the electronic device may perform operation S920.

In operation S920, the electronic device may determine whether evolved universal mobile telecommunication system (UMTS) terrestrial radio access network (E-UTRAN) new-radio dual connectivity (ENDC) is used. The ENDC may refer to a case in which LTE and 5G NR are used simultaneously (or contemporaneously). In addition, the electronic device may determine whether new radio dual connectivity (NRDC) is used, which indicates whether FR1 and FR2 bandwidths of 5G NR are used simultaneously (or contemporaneously). Furthermore, the electronic device may determine whether dual radio dual VoLTE is used, which indicates whether dual subscriber identity module (SIM) is used. That is, the electronic device may determine whether two Tx antennas are used in two RATs in operation S920. When the electronic device needs to support (or is to support) two RATs, the process may proceed to operation S925, and thus, transmission power may be assigned to each transmitting antenna according to a ratio.

In operation S930, the electronic device may determine whether uplink carrier aggregation (ULCA) is used. The ULCA may be one of events using two Tx antennas in one RAT. However, a transmission priority may be present depending on a type of transmitting component carrier (CC). In embodiments, in the case of an inter-band ULCA, a priority between a primary CC (Pcc) and a secondary CC (Scc) may be determined. For example, the Pcc may have a higher transmission priority than Scc. To this end, in operation S935, the electronic device may set different power allocations for the Pcc and the Scc so that an antenna configured to transmit the Pcc may use higher power than an antenna configured to transmit the Scc. In this case, a limited SAR value may also be set from a total amount perspective so that the electronic device may be used efficiently according to actual usage.

In operation S940, the electronic device may determine whether multiple-input multiple-output (MIMO) transmission is used. Like the inter-band ULCA described above, the MIMO transmission may be one of events using two Tx antennas in one RAT. However, unlike the inter-band ULCA, the MIMO transmission may have the same priority (or similar priorities) between the two Tx antennas. In addition, the electronic device may also determine whether intra-band ULCA transmission is used. The intra-band ULCA transmission may also be an event using two Tx antennas in one RAT and there may be no priority between the two Tx antennas. In operation S945, in response to determining MIMO transmission is used, the electronic device may set transmission power for each of the two Tx antennas. For example, the electronic device may assign a limited SAR value to the two Tx antennas in an equal ratio. Even when the limited SAR value is assigned to the two Tx antennas, a power limit value (and/or a power backoff value) may be differently assigned depending on target power according to the antenna. In operation S950, the electronic device may identify only one Tx antenna as being used in one RAT. Accordingly, the electronic device may set transmission power (e.g., a power limit value and/or a power backoff value) for one Tx antenna (e.g., a Tx0 antenna or a Tx1 antenna).

FIG. 10 is a flowchart of an operating method of a scenario of a 1-RAT and 2-Tx antenna with a priority, according to embodiments. According to embodiments, the operations described in connection with FIG. 10 may correspond to detailed operations of operation S430 of determining the transmission power of each of the plurality of antennas, based on a limited SAR value determined in S420 of FIG. 4.

Referring to FIG. 10, in operation S1010, an electronic device (e.g., 200 in FIG. 1) may determine whether the electronic device enters a non-terrestrial network (NTN) emergency mode. The NTN emergency mode may be a mode for responding to emergency situations, such as NTN-based emergency rescue requests. Therefore, in operation S1020, in response to the identification of the NTN emergency mode, the electronic device may set a higher priority for an NTN-based transmission. According to embodiments, the electronic device may perform operation S1010 in response to determining an operation mode of the electronic device corresponds to one in which communication is performed using only one communication network (RAT) and transmitting component carriers are prioritized.

In operation S1030, in response to determining the electronic device has not entered the NTN emergency mode (No in operation S1010), the electronic device may determine whether a correlation matrix (CM) is not 0 (e.g., whether the two Tx antennas are dependent on one another, as indicated by the value(s) of at least one corresponding cell in the correlation matrix) and whether two Tx antennas are used. For example, the electronic device may determine whether inter-band ULCA transmission is used. In embodiments, although both a first transmitting antenna Tx0 and a second transmitting antenna Tx1 are used, the first transmitting antenna Tx0 and the second transmitting antenna Tx1 may be independent of each other. For example, the first transmitting antenna Tx0 and the second transmitting antenna Tx1 may correspond to different antenna groups. Even when a signal is transmitted from the first transmitting antenna Tx0, the transmission of the signal may not affect a TER value of the second transmitting antenna Tx1, and thus, power may be independently assigned to the first transmitting antenna Tx0 and the second transmitting antenna Tx1. That is, when the first transmitting antenna Tx0 and the second transmitting antenna Tx1 are independent of each other, or only one transmitting antenna is used, the electronic device may perform operation S1040. In operation S1040, the electronic device may assign a power limit to each component carrier (CC) based on a limited SAR value. The electronic device may assign a power limit to a CC transmitted from the first transmitting antenna Tx0, based on a limited SAR value assigned to the first transmitting antenna Tx0, and assign a power limit to a CC transmitted from the second transmitting antenna Tx1, based on a limited SAR value assigned to the second transmitting antenna Tx1. Subsequently, in operation S1050, the electronic device may assign a total power limit as a maximum (or highest) value.

In embodiments, both the first transmitting antenna Tx0 and the second transmitting antenna Tx1 may be used, and the first transmitting antenna Tx0 and the second transmitting antenna Tx1 may be dependent on each other (Yes in operation S1030). Even when a signal is transmitted from the first transmitting antenna Tx0, the transmission of the signal may affect the TER value of the second transmitting antenna Tx1, and thus, power may not be independently assigned to the first transmitting antenna Tx0 and the second transmitting antenna Tx1. That is, when the first transmitting antenna Tx0 and the second transmitting antenna Tx1 are dependent on each other, the electronic device may perform operation S1060. That is, the electronic device may assign a power limit to an antenna (e.g., the first transmitting antenna Tx0)) configured to transmit a higher-priority CC, based on the limited SAR value. In operation S1070, the electronic device may assign a power limit to an antenna (e.g., the second transmitting antenna Tx1) configured to transmit a lower-priority CC, based on the limited SAR value. In this case, the power limit of the antenna configured to transmit the higher-priority CC may be lower than the power limit of the antenna configured to transmit the lower-priority CC. Subsequently, in operation S1080, the electronic device may assign a total power limit based on power limits of the higher-priority CC and the lower-priority CC.

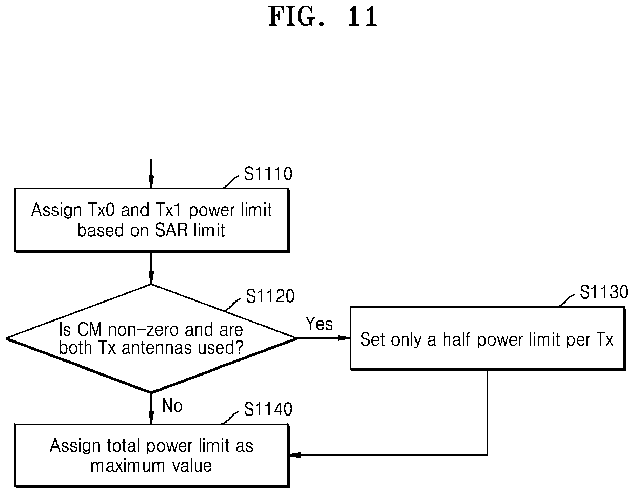

FIG. 11 is a flowchart of an operating method of a scenario of a 1-RAT and 2-Tx antenna without priority, according to embodiments. According to embodiments, the operations described in connection with FIG. 11 may correspond to detailed operations of operation S430 of determining the transmission power of each of the plurality of antennas, based on a limited SAR value determined in FIG. 4.

Referring to FIG. 11, in operation S1110, an electronic device (e.g., 200 in FIG. 1 may assign power limits to the first transmitting antenna Tx0 and the second transmitting antenna Tx1, based on a limited SAR value. In embodiments, the same power limit (or similar power limits) may be assigned to the first transmitting antenna Tx0 and the second transmitting antenna Tx1. According to embodiments, the electronic device may perform operation S1110 in response to determining an operation mode of the electronic device corresponds to one in which communication is performed using only one communication network (RAT) and transmitting component carriers are not prioritized.

In operation S1120, the electronic device may determine whether a correlation matrix is not 0 (e.g., whether the two Tx antennas are dependent on one another, as indicated by the value(s) of at least one corresponding cell in the correlation matrix) and whether two Tx antennas are used. For example, the electronic device may determine whether intra-band ULCA transmission or MIMO transmission is used. In embodiments, although both the first transmitting antenna Tx0 and the second transmitting antenna Tx1 are used, the first transmitting antenna Tx0 and the second transmitting antenna Tx1 may be independent of each other. For example, the first transmitting antenna Tx0 and the second transmitting antenna Tx1 may correspond to different antenna groups. Even when a signal is transmitted from the first transmitting antenna Tx0, the transmission of the signal may not affect a TER value of the second transmitting antenna Tx1, and thus, power may be independently assigned to the first transmitting antenna Tx0 and the second transmitting antenna Tx1. That is, when the first transmitting antenna Tx0 and the second transmitting antenna Tx1 are independent of each other, the electronic device may perform operation S1140.

In embodiments, both the first transmitting antenna Tx0 and the second transmitting antenna Tx1 may be used, and the first transmitting antenna Tx0 and the second transmitting antenna Tx1 may be dependent on each other. Even when a signal is transmitted from the first transmitting antenna Tx0, the transmission of the signal may affect the TER value of the second transmitting antenna Tx1, and thus, power may not be independently assigned to the first transmitting antenna Tx0 and the second transmitting antenna Tx1. That is, when the first transmitting antenna Tx0 and the second transmitting antenna Tx1 are dependent on each other, the electronic device may perform operation S1130. In operation S1130, the electronic device may set a half power limit (e.g., half of a maximum or highest value) for each transmitting antenna. This may be due to the fact that the same power limit is (or similar power limits are) assigned to the first transmitting antenna Tx0 and the second transmitting antenna Tx1 in operation S1110. Thereafter, in operation S1140, the electronic device may assign a total power limit as a maximum (or highest) value to each of the first and second transmitting antennas Tx0 and Tx1.

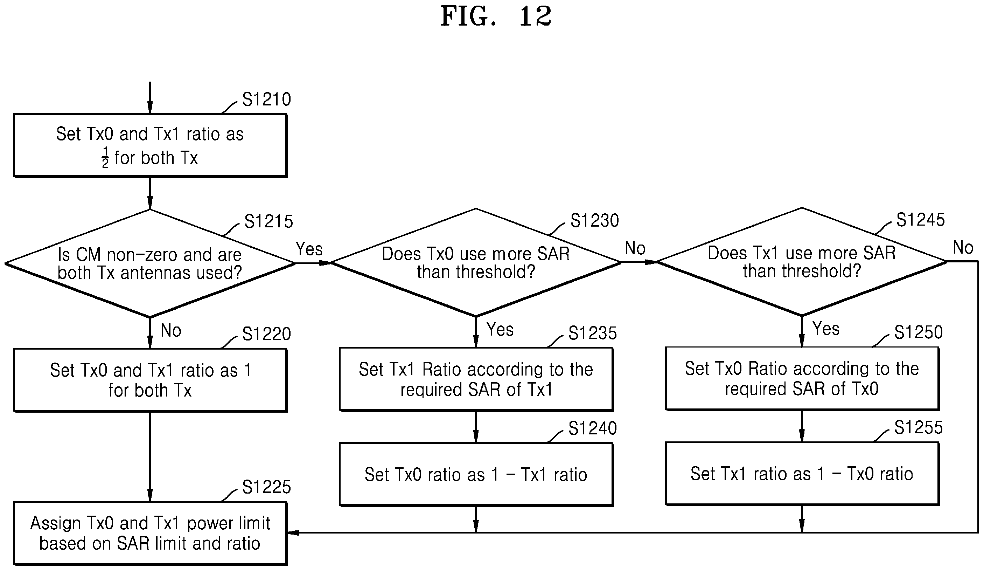

FIG. 12 is a flowchart of an operating method of a scenario of a 2-RAT and 2-Tx antenna with priority, according to embodiments. According to embodiments, the operations described in connection with FIG. 12 may correspond to detailed operations of operation S430 of determining the transmission power of each of the plurality of antennas, based on a limited SAR value determined in FIG. 4.

Referring to FIG. 12, in operation S1210, an electronic device (e.g., 200 in FIG. 1) may assign a half power limit to each transmitting antenna. For example, the electronic device may assign a half power limit to the first transmitting antenna Tx0 and a remaining half power limit to the second transmitting antenna Tx1. According to embodiments, the electronic device may perform operation S1210 in response to determining an operation mode of the electronic device corresponds to one in which communication is performed using two communication networks (RATs). According to embodiments, the operation mode discussed in connection with FIG. 12 may include prioritization of transmitting component carriers, but embodiments are not limited thereto.

In operation S1215, the electronic device may determine whether a correlation matrix is not 0 (e.g., whether the two Tx antennas are dependent on one another, as indicated by the value(s) of at least one corresponding cell in the correlation matrix) and whether two Tx antennas are used. For example, the electronic device may determine whether MIMO transmission is used. In embodiments, when the correlation matrix is 0, both the first transmitting antenna Tx0 and the second transmitting antenna Tx1 may be used, but the first transmitting antenna Tx0 and the second transmitting antenna Tx1 may be independent of each other. For example, the first transmitting antenna Tx0 and the second transmitting antenna Tx1 may correspond to different antenna groups. Even when a signal is transmitted from the first transmitting antenna Tx0, the transmission of the signal may not affect a TER value of the second transmitting antenna Tx1, and thus, the electronic device may independently assign power to the first transmitting antenna Tx0 and the second transmitting antenna Tx1. That is, when the first transmitting antenna Tx0 and the second transmitting antenna Tx1 are independent of each other, the electronic device may perform operation S1220. In operation S1220, the electronic device may assign a total power limit (e.g., a maximum or highest value) to each transmitting antenna (e.g., may set the ratio as 1 for both antennas). That is, because the signal transmission of the first transmitting antenna Tx0 does not affect the TER value of the second transmitting antenna Tx1, all assignable power limits may be independently assigned to the first transmitting antenna Tx0 and the second transmitting antenna Tx1.

In operation S1230, in response to determining that two Tx antennas are used and are dependent on one another (yes in operation S1215), the electronic device may determine whether the first transmitting antenna Tx0 is using an SAR value exceeding a threshold value. When the SAR value used by the first transmitting antenna Tx0 exceeds the threshold value, to satisfy a TER value regulatory condition of the electronic device, it may be necessary (or otherwise desirable) to modify a power limit of the second transmitting antenna Tx1, which is dependent. When the SAR value the first transmitting antenna Tx0 does not exceed the threshold value, operation S1245 may be performed to determine whether the SAR value used by the second transmitting antenna Tx1 exceeds the threshold value.

In operation S1235, in response to determining the first transmitting antenna Tx0 is uses an SAR value exceeding the threshold value (yes in operation S 1230), the electronic device may set a power limit ratio of the second transmitting antenna Tx1, based on a limited SAR value required (or otherwise used) for the second transmitting antenna Tx1. To this end, the electronic device may determine whether the limited SAR value required (or otherwise used) by the second transmitting antenna Tx1 exceeds a predetermined (or alternatively, given) ratio of a target SAR value. In an example, when the limited SAR value required (or otherwise used) for the second transmitting antenna Tx1 is less than 1/16 of a target SAR, the electronic device may reduce the power limit ratio of the second transmitting antenna Tx1 to 1/8. In another example, when the limited SAR value required (or otherwise used) for the second transmitting antenna Tx1 is less than 1/8 of the target SAR, the electronic device may reduce the power limit ratio of the second transmitting antenna Tx1 to 1/4.

In operation S1240, the electronic device may assign a power limit ratio to the first transmitting antenna Tx0. For example, because the sum of power limit ratios of the first transmitting antenna Tx0 and the second transmitting antenna Tx1 should be 1, the electronic device may assign a power limit ratio of (1 - Tx1) to the first transmitting antenna Tx0. Thereafter, the electronic device may perform operation S1225, and thus, respective power limits may be assigned to the first transmitting antenna Tx0 and the second transmitting antenna Tx1, based on the limited SAR value and the power limit ratio.

In operation S1245, the electronic device may determine whether the second transmitting antenna Tx1 is using an SAR value exceeding the threshold value. When the SAR value used by the second transmitting antenna Tx1 exceeds the threshold value, to satisfy a TER value regulatory condition of the electronic device, it may be necessary (or otherwise desirable) to modify power limits of the second transmitting antenna Tx1 and the first transmitting antenna Tx0, which is dependent. When the SAR value used by the second transmitting antenna Tx1 does not exceed the threshold value, operation S1225 may be performed. The electronic device may perform operation S1225, and thus, respective power limits may be assigned to the first transmitting antenna Tx0 and the second transmitting antenna Tx1, based on the limited SAR value and the power limit ratio.

In operation S1250, in response to determining the SAR value used by the second transmitting antenna Tx1 exceeds the threshold value (yes in operation S1245) the electronic device may set the power limit ratio of the first transmitting antenna Tx0, based on the limited SAR value required (or otherwise used) for the first transmitting antenna Tx0. To this end, the electronic device may determine whether the limited SAR value required (or otherwise used) for the first transmitting antenna Tx0 exceeds a predetermined (or alternatively, given) ratio of a target SAR value. In an example, when the limited SAR value required (or otherwise used) for the first transmitting antenna Tx0 is less than 1/16 of the target SAR value, the electronic device may reduce the power limit ratio of the first transmitting antenna Tx0 to 1/8. In another example, when the limited SAR value required (or otherwise used) for the first transmitting antenna Tx0 is less than 1/8 of the target SAR value, the electronic device may reduce the power limit ratio of the first transmitting antenna Tx0 to 1/4.

In operation S1255, the electronic device may assign the power limit ratio to the second transmitting antenna Tx1. For example, because the sum of the power limit ratios of the first transmitting antenna Tx0 and the second transmitting antenna Tx1 should be 1, the electronic device may assign a power limit ratio of (1 - Tx0) to the second transmitting antenna Tx1. Thereafter, the electronic device may perform operation S1225, and thus, respective power limits may be assigned to the first transmitting antenna Tx0 and the second transmitting antenna Tx1, based on the limited SAR value and the power limit ratio.

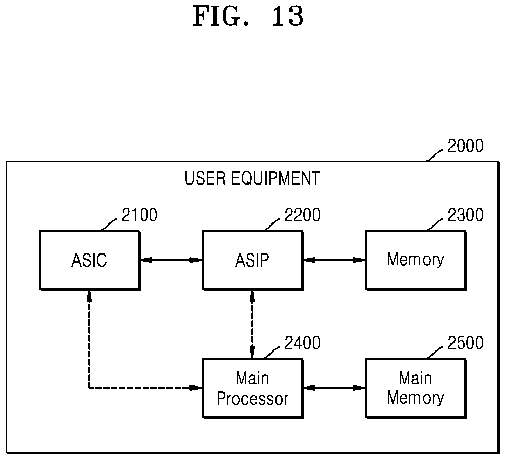

FIG. 13 is a block diagram of user equipment according to embodiments.

Referring to FIG. 13, user equipment 2000 may include an application specific integrated circuit (ASIC) 2100, an application specific instruction set processor (ASIP) 2200, a memory 2300, a main processor 2400, and/or a main memory 2500. At least two among the ASIC 2100, the ASIP 2200, and/or the main processor 2400 may communicate with each other. Also, at least two among the ASIC 2100, the ASIP 2200, the memory 2300, the main processor 2400, and/or the main memory 2500 may be embedded in one chip.

The ASIC 2100 may be an IC customized for a specific purpose and include, for example, a radio-frequency IC (RFIC), a modulator, and/or a demodulator. The ASIP 2200 may support a dedicated instruction set for a specific application and execute instructions included in the instruction set. The memory 2300 may communicate with the ASIP 2200 and serve as a non-transitory storage device that may store a plurality of instructions executed by the ASIP 2200. For example, the memory 2300 may include any type of memory accessible by the ASIP 2200, such as random access memory (RAM), read-only memory (ROM), a tape, a magnetic disc, an optical disk, volatile memory, non-volatile memory, and a combination thereof.

The main processor 2400 may control the user equipment 2000 by executing the plurality of instructions. For instance, the main processor 2400 may control the ASIC 2100 and the ASIP 2200 and process received data through a wireless communication network or process users' inputs to the user equipment 2000. The main memory 2500 may communicate with the main processor 2400 and serve as a non-transitory storage device that may store the plurality of instructions executed by the main processor 2400. For example, the main memory 2500 may include any type of memory accessible by the main processor 2400, such as RAM, ROM, a tape, a magnetic disc, an optical disk, volatile memory, non-volatile memory, and a combination thereof.

A component of the electronic device 200 or an operation of an operating method of the electronic device 200, according to embodiments, may be included in at least one of components included in the user equipment 2000 of FIG. 13. For example, the electronic device 200 of FIG. 1 or at least one of operations of the above-described operating method of the electronic device 200 may be implemented as the plurality of instructions stored in the memory 2300. The ASIP 2200 may perform an operation of the electronic device 200 or the at least one operation of the above-described operating method of the electronic device 200 by executing the plurality of instructions stored in the memory 2300. In another example, the electronic device 200 of FIG. 1 or at least one of operations of the above-described operating method of the electronic device 200 may be implemented as a hardware block and included in the ASIC 2100. In still another example, the electronic device 200 of FIG. 1 or at least one of operations of the above-described operating method of the electronic device 200 may be implemented as the plurality of instructions stored in the main memory 2500. The main processor 2400 may perform an operation of the electronic device 200 or at least one operation of the above-described operating method of the electronic device 200 by executing the plurality of instructions stored in the main memory 2500.

According to embodiments, by using a time-averaged SAR algorithm considering correlations between antennas, an increase in complexity that may occur in the future when the number of transmitting antennas increases or when a heterogeneous chip is provided, and operation time may be reduced.

Conventional devices and methods for controlling a transmission power of a wireless communication device to limit a total exposure ratio (TER) involve controlling the transmission power based on an instantaneous TER. However, this reliance on the instantaneous TER results in transmission power levels below those that reach the TER limit without surpassing this limit. Accordingly, the conventional devices and methods provide insufficient transmission power, thereby degrading communication performance of the wireless communication device.

However, according to embodiments, improved devices and methods are provided for controlling a transmission power of a wireless communication device. For example, the improved devices and methods may involve determining a specific absorption rate (SAR) based on power consumed by antennas of the wireless communication device, and assigning transmission powers to the antennas based on the SAR. Accordingly, the assigned transmission powers may be increased up to the TER limit while remaining below this limit. Therefore, the improved devices and methods overcome the deficiencies of the conventional devices and methods to at least increase transmission power, and thus, improve communication performance.

According to embodiments, operations described herein as being performed by the base station 100, the electronic device 200, the transmitter 210, the communication processor 220, the electronic device 200a, the transmitter 210a, the communication processor 220a, the controller 240a, the TAS controller 242a, the electronic device 200b, the WLBT module 250b, the controller 270b, the TAS controller 272b, the user equipment 2000, the ASIC 2100, the ASIP 2200 and/or the main processor 2400 may be performed by processing circuitry. The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a graphics processing unit (GPU), a digital signal processor, a microcomputer, a field programmable gate array (FPGA), a System-on-Chip (SoC), a programmable logic unit, a microprocessor, application-specific integrated circuit (ASIC), etc.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm, and/or functions, described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium (e.g., the memory 230a, the memory 260b, the memory 2300, the memory 2500, etc.). A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art. According to embodiments, the correlation matrix 241a and/or the correlation matrix 271b may be stored on a tangible, non-transitory computer-readable medium (e.g., the memory 230a, the memory 260b, the memory 2300, the memory 2500, etc.).

Embodiments may be described with reference to acts and symbolic representations of operations (e.g., in the form of flow charts, flow diagrams, data flow diagrams, structure diagrams, block diagrams, etc.) that may be implemented in conjunction with units and/or devices discussed in more detail herein. Although discussed in a particular manner, a function or operation specified in a specific block may be performed differently from the flow specified in a flowchart, flow diagram, etc. For example, functions or operations illustrated as being performed serially in two consecutive blocks may actually be performed concurrently, simultaneously, contemporaneously, or in some cases be performed in reverse order.

Although terms of "first" or "second" may be used to explain various components, the components are not limited to the terms. These terms should be used only to distinguish one component from another component. For example, a "first" component may be referred to as a "second" component, or similarly, and the "second" component may be referred to as the "first" component. Expressions such as "at least one of" when preceding a list of elements, modify the entire list of elements and do not modify the individual elements of the list. For example, the expression, "at least one of a, b, and c," should be understood as including only a, only b, only c, both a and b, both a and c, both b and c, all of a, b, and c, or any variations of the aforementioned examples. As used herein the term "and/or" includes any and all combinations of one or more of the associated listed items.

Any of the arrows or lines that interconnect the components in the drawings may represent physical data paths, logical data paths, or both. A physical data path may comprise a data bus or a transmission line, for example. A logical data path may represent a communication or data message between software programs, software modules, Subroutines, or other software constituents or components.

Effects of the inventive concepts should not be limited by the above description, and other unmentioned effects will be clearly understood by one of ordinary skill in the art from embodiments described herein. That is, unintended effects of the inventive concepts will be clearly understood by one of ordinary skill in the art from embodiments described herein.

While the inventive concepts have been particularly shown and described with reference to embodiments thereof, it will be understood that various changes in form and details may be made therein without departing from the scope of the following claims.

**Claims**

**1.** An electronic device comprising:

a plurality of antennas;
an antenna index buffer configured to store a used antenna index indicating at least one antenna among the plurality of antennas used in each of a plurality of windows;
a used power buffer configured to store power consumption of an antenna corresponding to the used antenna index; and
processing circuitry configured to:

calculate a residual specific absorption ratio (SAR) value of each of the plurality of antennas based on the used antenna index, the power consumption and a correlation matrix, and

assign transmission power to each of transmitting antennas based on the residual SAR and an operation mode, the transmitting antennas being among the plurality of antennas.

2. The electronic device of claim 1, wherein the correlation matrix is based on at least one of:

   correlations between the plurality of antennas;
   a respective direction in which each of the plurality of antennas emit electromagnetic waves;
   an amount of electromagnetic waves emitted by the plurality of antennas;
   a state of the electronic device; or
   distances between the plurality of antennas.

3. The electronic device of claim 1 or claim 2, wherein the processing circuitry is configured to:

   calculate a limited SAR value of at least one used antenna based on the residual SAR value, the at least one used antenna being among the plurality of antennas;
   calculate a transmission power limit of the at least one used antenna based on the limited SAR value; and
   set the transmission power for each of the transmitting antennas based on the transmission power limit of the at least one used antenna.

4. The electronic device of any preceding claim, wherein the processing circuitry is configured to reduce a limited SAR value of at least one used antenna based on the residual SAR value being less than a first ratio of a target SAR value, the at least one used antenna being among the plurality of antennas.

5. The electronic device of any preceding claim, wherein the processing circuitry is configured to set a limited SAR value of at least one used antenna as a maximum limited SAR value or back off the limited SAR value in response to determining the residual SAR value exceeds a first ratio based on an SAR slope.

6. The electronic device of any preceding claim, wherein

   the operation mode corresponds to a mode in which communication is performed using one communication network and transmitting component carriers (CCs) are prioritized, the CCs respectively corresponding to the transmitting antennas, and the transmitting antennas including a first transmitting antenna and a second transmitting antenna; and
   the processing circuitry is configured to:

      determine whether the first transmitting antenna is dependent on the second transmitting antenna based on the correlation matrix in response to determining the electronic device is using a non-terrestrial network or performing uplink carrier aggregation (ULCA) communication,
      set a power limit based on a limited SAR value of each of the transmitting antennas of a primary CC and a secondary CC of the ULCA in response to determining the first transmitting antenna is not dependent on the second transmitting antenna,
      assign transmission power to each of the transmitting antennas based on the power limit,
      assign a higher priority to a CC corresponding to the non-terrestrial network or the primary CC of the ULCA in response to determining the first transmitting antenna is dependent on the second transmitting antenna,
      assign a lower priority to the secondary CC of the ULCA in response to determining the first transmitting antenna is dependent on the second transmitting antenna,
      assign each of a first power limit corresponding to the higher priority and a second power limit corresponding to the lower priority to each of the transmitting antennas based on the limited SAR value, and
      assign transmission power to each of the transmitting antennas based on the first power limit and the second power limit.

7. The electronic device of any of claims 1 to 5, wherein

   the operation mode corresponds to a mode in which communication is performed using one communication network and transmitting component carriers (CCs) are not prioritized, the CCs respectively corresponding to the transmitting antennas, and the transmitting antennas including a first transmitting antenna and a second transmitting antenna; and
   the processing circuitry is configured to:

determine whether the electronic device is performing multiple-input multiple-output (MIMO) communication,

assign a power limit to each of transmitting antennas configured to transmit transmitting CCs based on a limited SAR value,

change the power limit assigned to each of the transmitting antennas to a half power limit in response to determining the electronic device is performing MIMO communication and the first transmitting antenna is dependent on the second transmitting antenna, and

set a power limit for each of the transmitting antennas to a maximum value in response to determining the electronic device is performing MIMO communication and the first transmitting antenna is not dependent on the second transmitting antenna.

8. The electronic device of any of claims 1 to 5, wherein

the operation mode corresponds to a mode in which communication is performed using two communication networks, the transmitting antennas including a first transmitting antenna and a second transmitting antenna; and the processing circuitry is configured to:

assign a limited SAR value to each of the transmitting antennas in an equal ratio,

set a limited SAR value for each of the transmitting antennas to a maximum value in response to determining the first transmitting antenna is not dependent on the second transmitting antenna, and

assign a power limit to each of the transmitting antennas, based on whether an SAR value of each of the transmitting antennas exceeds a threshold SAR value in response to determining the first transmitting antenna is dependent on the second transmitting antenna.

9. An operating method of an electronic device comprising a plurality of antennas, the method comprising:

calculating a residual SAR value of each of the plurality of antennas based on a used antenna index, power consumption and a correlation matrix, the used antenna index indicating at least one antenna among the plurality of antennas used in each of a plurality of windows, and the power consumption indicating a power consumption of an antenna corresponding to the used antenna index; and

assigning transmission power to each of transmitting antennas based on the residual SAR value and an operation mode.

10. The operating method of claim 9, wherein the correlation matrix is based on at least one of:

correlations between the plurality of antennas;
a respective direction in which each of the plurality of antennas emit electromagnetic waves;
an amount of electromagnetic waves emitted by the plurality of antennas;
a state of the electronic device; or
distances between the plurality of antennas.

11. The operating method of claim 9 or claim 10, wherein the assigning of the transmission power comprises:

calculating a limited SAR value of at least one used antenna based on the residual SAR value, the at least one used antenna being among the plurality of antennas;
calculating a transmission power limit of the at least one used antenna based on the limited SAR value; and
setting transmission of each of the transmitting antennas based on the transmission power limit of the at least one used antenna.

12. The operating method of any of claims 9 to 11, further comprising:

comparing the residual SAR value with a first ratio of a target SAR value;
reducing a limited SAR value of at least one used antenna in response to determining the residual SAR value is less than the first ratio of the target SAR value, the at least one used antenna being among the plurality of antennas; and
setting a limited SAR value of at least one used antenna as a maximum limited SAR value or backing off the limited SAR value in response to determining the residual SAR value exceeds a first ratio of the target SAR value based on an SAR slope.

13. The operating method of any of claims 9 to 11, wherein

the operation mode corresponds to a mode in which communication is performed using one communication network and transmitting component carriers (CC) are prioritized, the CCs respectively corresponding to the transmitting antennas, and the transmitting antennas including a first transmitting antenna and a second transmitting antenna; and
the operating method further comprises:

determining whether the first transmitting antenna is dependent on the second transmitting antenna based on the correlation matrix in response to determining the electronic device is using a non-terrestrial network or performing uplink carrier aggregation (ULCA) communication,
performing first operations in response to determining the first transmitting antenna is not dependent on the second transmitting antenna, the first operations including

setting a power limit based on a limited SAR value of each of the transmitting antennas of a primary CC and a secondary CC of the ULCA, and
assigning transmission power to each of the transmitting antennas based on the power limit, and

performing second operations in response to determining the first transmitting antenna is dependent on the second transmitting antenna, the second operations including

assigning a higher priority to a CC corresponding to the non-terrestrial network or the primary CC of the ULCA,
assigning a lower priority to the secondary CC of the ULCA,
assigning each of a first power limit corresponding to the higher priority and a second power limit corresponding to the lower priority to each of the transmitting antennas based on the limited SAR value, and
assigning transmission power to each of the transmitting antennas based on the first power limit and the second power limit.

14. The operating method of any of claims 9 to 11, wherein

the operation mode corresponds to a mode in which communication is performed using one communication network and transmitting component carriers (CCs) are not prioritized, the CCs respectively corresponding to the transmitting antennas, and the transmitting antennas including a first transmitting antenna and a second transmitting antenna; and
the operating method further comprises:

determining whether the electronic device is performing multiple-input multiple-output (MIMO) communication,
assigning a power limit to each of transmitting antennas configured to transmit transmitting CCs based on a limited SAR value,
changing the power limit assigned to each of the transmitting antennas to a half power limit in response to determining the electronic device is performing MIMO communication and the first transmitting antenna is dependent on the second transmitting antenna, and
setting a power limit for each of the transmitting antennas to a maximum value in response to determining the electronic device is performing MIMO communication and the first transmitting antenna is not dependent on the second transmitting antenna.

15. The operating method of any of claims 9 to 11, wherein:

the operation mode is a mode in which communication is performed using two communication networks, the transmitting antennas including a first transmitting antenna and a second transmitting antenna; and
the operating method further comprises:

assigning a limited SAR value to each of the transmitting antennas in an equal ratio,

setting a limited SAR value for each of the transmitting antennas to a maximum value in response to determining the first transmitting antenna is not dependent on the second transmitting antenna, and assigning a power limit to each of the transmitting antennas based on whether an SAR value of each of the transmitting antennas exceeds a threshold SAR value in response to determining the first transmitting antenna is dependent on the second transmitting antenna.

# FIG. 1

# FIG. 2A

# FIG. 2B

# FIG. 3A

R = 1    Ant1    AG0    R = 0    AG1    Ant3    R = 1

Ant2    Ant4

R = 0

R = 0

Module2    R = 0    Module3

R = 0

Ant6

Ant0    AG3    R = 0    AG2    R = 1

Ant5

Relationship between the antennas
Relationship between the antenna modules

# FIG. 3B

# FIG. 3C

| R(1,1) | R(1,2) | $\cdots$ | $\cdots$ | R(1,N) |
|---|---|---|---|---|
| R(2,1) | R(2,2) | $\cdots$ | $\cdots$ | R(2,N) |
| $\vdots$ | $\ddots$ | $\ddots$ | $\ddots$ | $\vdots$ |
| R(N,1) | $\cdots$ | $\ddots$ | $\ddots$ | $\vdots$ |
| R(N,1) | $\cdots$ | $\cdots$ | $\cdots$ | R(N,N) |

300

# FIG. 4

```
                    START

        SET PARAMETER RELATED TO          S410
          TRANSMISSION POWER

      DETERMINE LIMITED SAR VALUE FOR EACH   S420
         OF PLURALITY OF ANTENNAS

      DETERMINE TRANSMISSION POWER OF EACH
        OF PLURALITY OF ANTENNAS, BASED ON   S430
         DETERMINED LIMITED SAR VALUE

                     END
```

# FIG. 5A

START

CALCULATE SAR VALUE OF SLOT BASED ON LIMITED TRANSMISSION POWER ⸺ S510

ACCUMULATE SLOT SAR CALCULATIONS DURING ONE WINDOW ⸺ S520

SET PARAMETER BASED ON SAR CALCULATION ⸺ S530

END

# FIG. 5B

TER MEASUREMENT INTERVAL (M WINDOWS)

| W0 | W1 | W2 | W3 | · · · | | | WM | | | |

WINDOW (R SLOTS)

## FIG. 6

START

CALCULATE SAR DURING MEASUREMENT INTERVAL — S610

CALCULATE RESIDUAL SAR VALUE — S620

S630 — IS RESIDUAL SAR VALUE INSUFFICIENT?

NO

YES

S650 — IS LIMITED SAR VALUE OF EACH OF PLURALITY OF ANTENNAS TO BE PREEMPTIVELY CHANGED?

YES

NO

S640 — LOWER LIMITED SAR VALUE

S670 — SET PARAMETER BASED ON SAR CALCULATION

S660 — BACK OFF LIMITED SAR VALUE

# FIG. 7

Power [dBm]

Pmax
Plimit
Pused(m+1)
Pused(m)

setting target window

TER measurement interval

... m−1 m m+1 m+2 ... m+M−1 m+M Time[sec]

# FIG. 8A

**Set#1**

| Used Power Buffer | Pused(m) | Pused(m-1) | Pused(m-2) | · · · | Pused(m-M+2) | Pused(m-M+1) |
|---|---|---|---|---|---|---|

| Ant. Idx. Buffer | AntIdx(m) | AntIdx(m-1) | AntIdx(m-2) | · · · | AntIdx(m-M+2) | AntIdx(m-M+1) |
|---|---|---|---|---|---|---|

←————————————————————Moving average window————————————————————→

**Set#2**

| Used Power Buffer | Pused(m) | Pused(m-1) | Pused(m-2) | · · · | Pused(m-M+2) | Pused(m-M+1) |
|---|---|---|---|---|---|---|

| Ant. Idx. Buffer | AntIdx(m) | AntIdx(m-1) | AntIdx(m-2) | · · · | AntIdx(m-M+2) | AntIdx(m-M+1) |
|---|---|---|---|---|---|---|

←————————————————————Moving average window————————————————————→

# FIG. 8B

EP 4 586 701 A1

| Pused($m_1$) | AntIdx(1) |
|---|---|
| Pused($m_2$) | AntIdx(2) |
| ⋮ | ⋮ |
| ⋮ | ⋮ |
| Pused($m_N$) | AntIdx(N) |

$\otimes$

| $R_{conv}(1,1)$ | $R_{conv}(1,2)$ | $\cdots$ | $R_{conv}(1,N)$ |
|---|---|---|---|
| $R_{conv}(2,1)$ | $R_{conv}(2,2)$ | $\cdots$ | $R_{conv}(2,N)$ |
| ⋮ | ⋱ | ⋱ | ⋮ |
| $R_{conv}(N,1)$ | $\cdots$ | $\cdots$ | $R_{conv}(N,N)$ |

$=$

| AvgSAR$_{Spat}$(t) | AvgSAR$_{Spat}$(t+1) | $\cdots$ |
|---|---|---|

# FIG. 9

# FIG. 10

S1010

Is NTN emergency mode?

— Yes → S1020

Set NTN's priority as high priority

— No ↓

S1030

Is CM non-zero and are both Tx antennas used?

— Yes → S1060

Assign high priority CC power limit based on SAR limit

↓ S1070

Assign low priority CC power limit based on SAR limit

↓ S1080

Assign total power limit based on the power limit of high and low priority CC

— No ↓ S1040

Assign each CC power limit based on SAR limit

↓ S1050

Assign total power limit as maximum value

# FIG. 11

S1110
Assign Tx0 and Tx1 power limit
based on SAR limit

S1120
Is CM non-zero and are
both Tx antennas used? —Yes→ S1130
Set only a half power limit per Tx

No
S1140
Assign total power limit as
maximum value

# FIG. 12

Set Tx0 and Tx1 ratio as $\frac{1}{2}$ for both Tx — S1210

Is CM non-zero and are both Tx antennas used? — S1215 → Yes

Does Tx0 use more SAR than threshold? — S1230 → No

Does Tx1 use more SAR than threshold? — S1245 → No

No (S1215) → Set Tx0 and Tx1 ratio as 1 for both Tx — S1220

Yes (S1230) → Set Tx1 Ratio according to the required SAR of Tx1 — S1235

Yes (S1245) → Set Tx0 Ratio according to the required SAR of Tx0 — S1250

Set Tx0 ratio as 1 − Tx1 ratio — S1240

Set Tx1 ratio as 1 − Tx0 ratio — S1255

Assign Tx0 and Tx1 power limit based on SAR limit and ratio — S1225

EP 4 586 701 A1

# FIG. 13

**EUROPEAN SEARCH REPORT**

Application Number

EP 25 15 1218

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/139016 A1 (NADAKUDUTI JAGADISH [US] ET AL) 4 May 2023 (2023-05-04) * paragraph [0035] - paragraph [0222]; figures 3, 8, 9 * ----- | 1-15 | INV. H04W52/14 H04B7/0413 H04W52/36 H04W52/42 |

TECHNICAL FIELDS
SEARCHED (IPC)

H04W
H04B

The present search report has been drawn up for all claims

| Place of search | Date of completion of the search | Examiner |
|---|---|---|
| The Hague | 20 May 2025 | Tejera, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 1218

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2025

| Patent document cited in search report | Publication date | Patent family member(s) | | Publication date |
|---|---|---|---|---|
| US 2023139016 A1 | 04-05-2023 | CN | 118140539 A | 04-06-2024 |
| | | EP | 4427505 A1 | 11-09-2024 |
| | | KR | 20240088979 A | 20-06-2024 |
| | | US | 2023139016 A1 | 04-05-2023 |
| | | WO | 2023081678 A1 | 11-05-2023 |

EPO FORM P0459

For more details about this annex : see Official Journal of the European Patent Office, No. 12/82